# EUROPEAN PATENT SPECIFICATION

(11) **EP 0 360 359 B1**
(45) Date of publication and mention of the grant of the patent: **14.04.1993**
(21) Application number: 89202390.4
(22) Date of filing: 21.09.1989
(51) Int. Cl.: C08G 67/02, B01J 31/04, B01J 31/18, B01J 31/24

(54) **Preparation of catalyst solution**
Bereitung einer katalytischen Lösung
Préparation d'une solution catalytique

(30) Priority: 22.09.1988 NL 8802347
(43) Date of publication of application: 28.03.1990
(73) Proprietor: SHELL INTERNATIONALE RESEARCH MAATSCHAPPIJ B.V., 2596 HR Den Haag (NL)
(72) Inventor: Van Broekhoven, Johannes Adrianus, NL-1031 CM Amsterdam (NL); Miedema, Wiebren, NL-1031 CM Amsterdam (NL)

(56) References cited:
- EP-A- 0 239 145
- EP-A- 0 246 674
- EP-A- 0 305 011
- EP-A- 0 319 083

## Description

The invention relates to a process for the preparation of a catalyst solution which can be suitably used in the preparation of polymers of carbon monoxide with one or more olefinically unsaturated compounds.

Linear polymers of carbon monoxide with one or more olefinically unsaturated compounds (for the sake of brevity referred to as A), in which polymers the monomer units -(CO)- on the one hand, and the units -A′- derived from the monomers A used on the other hand, occur in alternating order, can be prepared by contacting the monomers at an elevated temperature and pressure and in the presence of a diluent in which the polymers are insoluble or virtually insoluble, with a catalyst which has been obtained by combining, in a solvent for the catalyst, the three compounds following: a palladium salt of a monocarboxylic acid, a halogen monocarboxylic acid with a pKa of less than 2 and a bisphosphine with the general formula (R¹)₂P-R-P(R¹)₂, wherein R¹ represents an aromatic hydrocarbyl group and R is a bivalent organic bridging group containing at least two carbon atoms in the bridge.

As a rule, polymerization is carried out by introducing a catalyst solution into a reactor which contains the monomers and the diluent and which is at the desired temperature and pressure. During polymerization, the polymers are obtained in the form of a suspension in the diluent. After the required degree of polymerization is attained, polymerization is terminated, generally by cooling to room temperature and releasing the pressure.

Several liquids may be considered for use as diluent in the polymerization. However, preference is given to lower aliphatic alcohols, such as methanol, for it has been found that in these, the above-mentioned catalysts display their highest level of activity.

It has been found that as solvent to be used in the preparation of the catalyst, lower aliphatic alcohols, such as methanol, are excellently suitable. Since it is preferred in the present polymerization to use only a single liquid - also with a view to possible distillative recovery of the diluent from the reaction liquid - the same lower aliphatic alcohol was thus far employed both as solvent for the catalyst and as diluent in the polymerization.

An earlier investigation carried out by the Applicant into this polymer preparation has shown that the order in which the three compounds are added to the lower aliphatic alcohol during the polymer preparation greatly influences the polymerization rate achieved during polymerization. It was found that of the six possible orders in which the three compounds can be added to the lower aliphatic alcohol, the one in which first the bisphosphine, then the palladium salt and finally the acid are added, affords the catalyst with the highest activity.

In the polymerization described hereinbefore, both reaction rates and average molecular weights of the prepared polymers play an important role. On the one hand, it is desirable that the reaction rates achieved in the polymer preparation be as high as possible and on the other hand, the polymers will have a higher value with a view to their eventual uses as their molecular weights are higher. Both reaction rates and molecular weights can be influenced by the temperature applied during polymerization. Unfortunately, the effects which the temperature has on reaction rates and on molecular weights are opposed to one another, in that, at otherwise similar reaction conditions, an increase in reaction temperature leads to increased reaction rates but decreased molecular weights.

In an earlier investigation carried out by the Applicant into the above-mentioned catalysts, it was found that their performance can be improved considerably when during their preparation, not a bisphosphine with the general formula (R¹)₂P-R-P(R¹)₂ is applied, but a bisphosphine with the general formula (R²)₂P-R-P(R²)₂, in which general formula R² represents an aryl group containing at least one alkoxy substituent in a position ortho in respect to the phosphorus atom to which the aryl group is bound. Comparison of the performances of the original catalysts which were prepared by using a bisphosphine having the general formula (R¹)₂P-R-P(R¹)₂ with those of the modified catalysts which were prepared by using a bisphosphine having the general formula (R²)₂P-R-P(R²)₂, shows that when the reaction rate is the same for both catalysts, the modified catalysts lead to polymers having higher molecular weights, and concomitantly, that when the two catalysts are used to prepare polymers having the same molecular weight, the modified catalysts exhibit higher reaction rates.

Although the application of catalysts which have been prepared by using a bisphosphine with the general formula (R²)₂P-R-P(R²)₂ does offer advantages, as was discussed hereinbefore, the use of these bisphosphines also entails two problems, one in connection with the preparation of the catalysts and another in connection with the application of the catalysts.

Both in the case of the catalysts prepared by using a bisphosphine with the general formula (R²)₂P-R-P(R²)₂ and in the case of those prepared by using a bisphosphine with the general formula (R¹)₂P-R-P(R¹)₂, it holds that the highest activities are obtained with catalysts in the preparation of which first the bisphosphine, then the palladium compound and finally the acid are added to the solvent for the catalyst. Initially, the fact that bisphosphines with the general formula (R²)₂P-R-P(R²)₂ have an extremely poor solubility in lower aliphatic alcohols was a considerable obstacle to preparing the catalysts in this way. The Applicant has recently found a solution to this problem by adding the bisphosphine not as such, but as a solution in an aromatic hydrocarbon, such as toluene, to the lower aliphatic alcohol (EP-A-319 083).

The problem connected with the application of the catalysts involves the short shelf life of catalyst solutions prepared by adding to a lower aliphatic alcohol first a solution of a bisphosphine with the general formula (R²)₂P-R-P(R²)₂ in an aromatic hydrocarbon, then a palladium salt of a monocarboxylic acid and finally a halogen monocarboxylic acid with a pKa of less than 2. In the preparation of the present polymers on a technical scale, it is customary to carry out several successive polymerization reactions under the same conditions, with the catalyst solution needed for each polymerization being obtained from a supply of solution prepared in advance. When several polymerization reactions are carried out on a technical scale under constant conditions, this is naturally done in order to obtain polymers of constant properties. The afore-mentioned insufficient shelf life of the catalyst solutions manifests itself to the effect that the later the required catalyst solution is withdrawn from the supply solution, the lower will be the molecular weights of the polymers prepared by using this solution.

The Applicant has carried out an investigation in order to find a solution to this problem. This investigation has now shown that catalyst solutions with excellent storage stability can be obtained by combining a bisphosphine with the general formula (R²)₂P-R-P(R²)₂ and a palladium salt of a monocarboxylic acid in an aprotic polar solvent and adding a halogen monocarboxylic acid with a pKa of less than 2 to the mixture thus obtained.

Apart from the fact that the storage stability of the catalyst solutions thus obtained is excellent, the method of preparation now found offers three additional advantages over the existing technique in which first a solution of the bisphosphine in an aromatic hydrocarbon, then the palladium salt and finally the halogen monocarboxylic acid were added to a lower aliphatic alcohol. In the first place, the catalyst solutions now prepared surprisingly have a higher activity. Further, the order in which the bisphosphine and the palladium compound are added to the non-protic polar solvent has no influence on the activity of the catalyst solution. Finally, in the method now found, a single solvent is sufficient.

The present patent application therefore relates to a process for the preparation of a catalyst solution, in which process a palladium salt of a monocarboxylic acid and a bisphosphine with the general formula (R²)₂P-R-P(R²)₂, in which R² represents an aryl group containing at least one alkoxy substituent in a position ortho in respect to the phosphorus atom to which the aryl group is bound and R is a bivalent organic bridging group containing at least two carbon atoms in the bridge, are combined in an aprotic polar solvent, and in which process a halogen monocarboxylic acid with a pKa of less than 2 is added to the mixture thus obtained.

As aprotic polar solvents that may be used in the preparation of the catalyst solutions of the invention may be mentioned aliphatic ketones, such as acetone and methyl ethyl ketone, aliphatic carboxylic acid esters, such as methyl acetate, ethyl acetate and methyl propionate, cyclic ethers, such as tetrahydrofuran and dioxane, alkyl ethers of glycols, such as the dimethyl ether of diethylene glycol, lactones, such as gamma-butyrolactone, lactams, such as N-methylpyrrolidone and cyclic sulphones, such as sulpholane. Very good results have been obtained when using an aprotic polar solvent chosen from the group made up of acetone, methyl ethyl ketone, methyl acetate, tetrahydrofuran, gamma-butyrolactone, N-methylpyrrolidone and sulpholane.

The palladium salt of a monocarboxylic acid that is used in the preparation of the catalyst solutions of the invention is preferably palladium acetate. A palladium salt of a halogen monocarboxylic acid with a pKa of less than 2, such as palladium trifluoroacetate, may also be employed for the purpose, if desired.

In the bisphosphine that is used in the preparation of the catalyst solutions of the invention, group R² is preferably a phenyl group containing at least one methoxy substituent in a position ortho in respect to the phosphorus atom to which the phenyl group is bound and bridging group R preferably contains three atoms in the bridge, at least two of which are carbon atoms. Examples of suitable bridging groups R are the -CH₂-CH₂-CH₂-group, the -CH₂-C(CH₃)₂-CH₂-group and the -CH₂-Si(CH₃)₂-CH₂-group. Bisphosphines that can be very suitably used in the preparation of the catalyst solutions of the invention are
1,3-bis[di(2-methoxyphenyl)phosphino]propane,
1,3-bis[di(2,4-dimethoxyphenyl)phosphino]propane,
1,3-bis[di(2,6-dimethoxyphenyl)phosphino]propane, and
1,3-bis[di(2,4,6-trimethoxyphenyl)phosphino]propane.

In the preparation of the catalyst solutions of the invention, preference is given to the use of 1,3-bis[di(2-methoxyphenyl)phosphino]propane as bisphosphine. In the preparation of the catalyst solutions, the bisphosphines are preferably employed in a quantity of from 1.0 to 1.5 and in particular of from 1.0 to 1.2 mol per mol of palladium.

As halogen monocarboxylic acid with a pKa of less than 2 that may be used in the preparation of the catalyst solutions of the invention may be mentioned, inter alia, trichloroacetic acid, difluoroacetic acid and trifluoroacetic acid. As halogen monocarboxylic acid with a pKa of less than 2, trifluoroacetic acid is preferred. In the preparation of the catalyst solutions, the halogen monocarboxylic acids are preferably employed in such a quantity that 7.5-30 and in particular 10-25 mol of anion thereof is present in the catalyst solutions, per mol of palladium. If a palladium salt of a halogen monocarboxylic acid with a pKa of less than 2 is employed in the preparation of the catalyst solutions, the 2 mol of anion per mol of palladium that are brought into the catalyst solution via the palladium salt are also included in the afore-mentioned quantities of anion.

In order to enhance the activities of the catalyst solutions, a 1,4-quinone may further be incorporated. 1,4-benzoquinones and 1,4-naphthoquinones are very suitable for the purpose. Preferably, the amount of 1,4-quinone used is 10 to 1000 and in partiular 25 to 250 mol per mol of palladium.

The catalyst solutions of the invention are excellently suited to be used in the preparation of linear alternating polymers of carbon monoxide with one or more olefinically unsaturated compounds. Olefinically unsaturated compounds that can be suitably polymerized with carbon monoxide are compounds consisting exclusively of carbon and hydrogen as well as compounds which, in addition to carbon and hydrogen, contain one or more hetero-atoms. The catalyst solutions of the invention are preferably applied for the preparation of polymers of carbon monoxide with one or more olefinically unsaturated hydrocarbons. Examples of suitable hydrocarbon monomers are ethene and other alpha-olefins, such as propene, butene-1, hexene-1 and octene-1. The catalyst solutions of the invention are particularly very suitable for application in the preparation of copolymers of carbon monoxide with ethene and for the preparation of terpolymers of carbon monoxide with ethene and another a-olefin, in particular propene.

The quantity of catalyst solution employed in the preparation of the polymers may vary within wide limits. The quantity of catalyst solution used per mol of olefinically unsaturated compound to be polymerized preferably contains from 10⁻⁷ to 10⁻³ and in particular from 10⁻⁶ to 10⁻⁴ mol of palladium.

The polymerization is performed by contacting the monomers at an elevated temperature and pressure and in the presence of a diluent in which the polymers are insoluble or virtually insoluble, with a catalyst solution of the invention. Diluents that are very suitable for the polymerization are lower aliphatic alcohols, such as methanol. The polymer preparation is preferably carried out at a temperature of from 40 to 120°C and a pressure of from 20 to 150 bar and in particular at a temperature of from 50 to 100°C and a pressure of from 30 to 100 bar. The molar ratio in the mixture to be polymerized of the olefinically unsaturated compounds relative to carbon monoxide is preferably from 10:1 to 1:5 and in particular from 5:1 to 1:2. Polymerization may be carried out batchwise or continuously.

As a rule, the polymers to which the invention relates will exhibit higher intrinsic viscosities according as their molecular weights are higher. For the determination of the intrinsic viscosity of a polymer prepared according to the invention, four solutions are first of all prepared by dissolving the polymer in four different concentrations at 60°C in m-cresol. For each of these solutions, the viscosity is measured in a viscometer at 60°C relative to m-cresol at 60°C. If Tₒ represents the outflow time of m-cresol and Tₚ the outflow time of the polymer solution, the relative viscosity (ηᵣₑₗ) is obtained from${\text{η}}_{\text{rel}} \text{=} \frac{{\text{T}}_{\text{p}}}{{\text{T}}_{\text{o}}}$
From ηᵣₑₗ can be calculated the inherent viscosity (η ᵢₙₕ) according to the formula${\text{η}}_{\text{inh}} \text{=} \frac{{\text{ln η}}_{\text{rel}}}{\text{c}} \text{,}$
wherein c represents the concentration of the polymer in grams per 100 ml of solution. By plotting graphically the ηᵢₙₕ found for each of the four polymer solutions against the corresponding concentration (c) and then by extrapolating to c=0, the intrinsic viscosity [η ] in dl/g is found. Instead of "intrinsic viscosity", this patent application will henceforth use the term recommended by the International Union of Pure and Applied Chemistry, viz. "Limiting Viscosity Number" (LVN).

The invention will now be illustrated with the aid of the following examples.

### Example 1

A catalyst solution was prepared by adding, in a nitrogen atmosphere, with stirring, first a solution of 0.12 mmol 1,3-bis[di(2-methoxyphenyl)phosphino]propane in 15 ml toluene, then 0.1 mmol palladium acetate and finally 2 mmol trifluoroacetic acid, to 45 ml of methanol.

### Example 2

A catalyst solution was prepared by adding, in a nitrogen atmosphere, with stirring, first 0.12 mmol 1,3-bis[di(2-methoxyphenyl)phosphino]propane, then 0.1 mmol palladium acetate and finally 2 mmol trifluoroacetic acid, to 60 ml of acetone.

### Example 3

A catalyst solution was prepared substantially in the same way as in Example 2, except that instead of acetone, tetrahydrofuran was employed.

### Example 4

A catalyst solution was prepared substantially in the same way as in Example 2, except that instead of acetone, sulpholane was employed.

### Example 5

A catalyst solution was prepared by adding with stirring, first 0.1 mmol palladium acetate, then 0.12 mmol 1,3-bis[di(2-methoxyphenyl)phosphino]propane, and finally 2 mmol trifluoroacetic acid, to 60 ml of methyl acetate.

### Example 6

A catalyst solution was prepared substantially in the same way as in Example 5, except that instead of methyl acetate, methyl ethyl ketone was employed.

### Example 7

A catalyst solution was prepared substantially in the same way as in Example 5, except that instead of methyl acetate, N-methylpyrrolidone was employed.

### Example 8

A catalyst solution was prepared substantially in the same way as in Example 5, except that instead of methyl acetate, gamma-butyrolactone was employed.

### Example 9

A carbon monoxide/ethene/propene terpolymer was prepared as follows. A mechanically stirred autoclave with a volume of 300 ml was charged with 180 ml of methanol. Any air present in the autoclave was removed by pressurizing the autoclave with carbon monoxide to a pressure of 50 bar, after which the pressure was released; this treatment was repeated twice over. After the autoclave was brought to 80°C, 14 bar propene, then 22 bar ethene and finally 20 bar carbon monoxide were blown in. Subsequently, 6 ml of the fresh catalyst solution prepared according to Example 1 was introduced into the autoclave. The pressure inside the autoclave was kept up by pressing in a 1:1 carbon monoxide/ethene mixture. After 2 hours, polymerization was terminated by cooling to room temperature and releasing the pressure. The terpolymer was filtered off, washed with methanol and dried at 70°C.

The yield was 14.8 g of terpolymer. The average polymerization rate was 7.0 kg terpolymer/g palladium.hour. The terpolymer had a melting point of 225°C and an LVN(60) of 2.2 dl/g.

### Example 10

A carbon monoxide/ethene/propene terpolymer was prepared substantially in the same way as in Example 9, except that now 6 ml of the catalyst solution prepared according to Example 1 was used, 10 days after it had been prepared.

The yield was 15.3 g of terpolymer. The average polymerization rate was 7.2 kg terpolymer/g palladium.hour. The terpolymer had a melting point of 224°C and an LVN(60) of 1.8 dl/g.

### Example 11

A carbon monoxide/ethene/propene terpolymer was prepared substantially in the same way as in Example 9, except that now 6 ml of the catalyst solution prepared according to Example 1 was used, 20 days after it had been prepared.

The yield was 14.0 g of terpolymer. The average polymerization rate was 6.6 kg terpolymer/g palladium.hour. The terpolymer had a melting point of 224°C and an LVN(60) of 1.5 dl/g.

### Example 12

A carbon monoxide/ethene/propene terpolymer was prepared substantially in the same way as in Example 9, except that now 6 ml of the catalyst solution prepared according to Example 1 was used, 30 days after it had been prepared.

The yield was 15.0 g of terpolymer. The average polymerization rate was 7.1 kg terpolymer/g palladium.hour. The terpolymer had a melting point of 227°C and an LVN(60) of 1.1 dl/g.

### Example 13

A carbon monoxide/ethene/propene terpolymer was prepared substantially in the same way as in Example 9, except that now 6 ml of the fresh catalyst solution prepared according to Example 2 was used.

The yield was 17.7 g of terpolymer. The average polymerization rate was 8.4 kg terpolymer/g palladium.hour. The terpolymer had a melting point of 225°C and an LVN(60) of 2.1 dl/g.

### Example 14

A carbon monoxide/ethene/propene terpolymer was prepared substantially in the same way as in Example 9, except that now 6 ml of the catalyst solution prepared according to Example 2 was used, 30 days after it had been prepared.

The yield was 18.0 g of terpolymer. The average polymerization rate was 8.5 kg terpolymer/g palladium.hour. The terpolymer had a melting point of 224°C and an LVN(60) of 2.3 dl/g.

### Example 15

A carbon monoxide/ethene/propene terpolymer was prepared substantially in the same way as in Example 9, except that now 6 ml of the fresh catalyst solution prepared according to Example 5 was used.

The yield was 17.8 g of terpolymer. The average polymerization rate was 8.4 kg terpolymer/g palladium.hour. The terpolymer had a melting point of 226°C and an LVN(60) of 2.2 dl/g.

### Example 16

A carbon monoxide/ethene/propene terpolymer was prepared substantially in the same way as in Example 9, except that now 6 ml of the catalyst solution prepared according to Example 5 was used, 30 days after it had been prepared.

The yield was 17.5 g of terpolymer. The average polymerization rate was 8.3 kg terpolymer/g palladium.hour. The terpolymer had a melting point of 227°C and an LVN(60) of 2.1 dl/g.

Of Examples 1-16, Examples 2-8 and 13-16 are examples in accordance with the invention. In Examples 2-8, catalyst solutions of the invention were prepared by combining the palladium salt and the bisphosphine in an aprotic polar solvent and adding the halogen mono carboxylic acid to the mixture thus obtained. In Examples 2-4, first the bisphosphine and then the palladium salt was added to the solvent. In Examples 5-8, the two compounds were added to the solvent in reverse order. In Examples 13-16, carbon monoxide/ethene/propene terpolymers were prepared by using catalyst solutions of the invention. In Examples 13 and 15, different freshly prepared catalyst solutions were used. In Examples 14 and 16, the same catalyst solutions were used, but after 30 days of ageing.

Examples 1 and 9-12 fall outside the scope of the invention. They have been included in the patent application for comparison. In Example 1, a catalyst solution was prepared in the conventional way, by successively adding a solution of the bisphosphine in toluene, the palladium compound and the halogen monocarboxylic acid, to methanol. In Example 10-12, carbon monoxide/ethene/propene terpolymers were prepared with the aid of the catalyst solution thus prepared, namely as freshly prepared catalyst solution, and after 10, 20 and 30 days of ageing, respectively.

The lack of storage stability of the catalyst solutions prepared in the conventional way becomes evident upon comparison of the results obtained in Examples 9-12. At polymerization rates lying within the range of from 6.6 to 7.2 kg terpolymer/g palladium/hour, the application of a fresh catalyst solution and of catalyst solutions which had aged for 10, 20 and 30 days, respectively, led to terpolymers having LVN(60)'s of 2.2, 1.8, 1.5 and 1.1 dl/g, respectively.

The excellent storage stability of the catalyst solutions of the invention as well as their higher level of activity become evident upon comparison of the results of Examples 13-16 with those of Examples 9-12. At polymerization rates lying within the range of from 8.3 to 8.5 kg terpolymer/g palladium/hour, the application of freshly prepared catalyst solutions and of catalyst solutions which had aged for 30 days, in Examples 13-16 led to terpolymers having LVN(60)′s lying within the range of from 2.1 to 2.3 dl/g.

With the aid of ¹³C-NMR analysis it was established that the carbon monoxide/ethene/propene terpolymers prepared by Examples 9-16 had a linear structure and consisted of units of the formula -(CO)-(C₂H₄)- and units of the formula -(CO)-(C₃H₆)-, which units occurred randomly distributed within the terpolymers.

## Claims

1. Process for the preparation of a catalyst solution, characterized in that a palladium salt of a monocarboxylic acid and a bisphosphine with the general formula (R²)₂P-R-P(R²)₂, in which R² represents an aryl group containing at least one alkoxy substituent in a position ortho in respect to the phosphorus atom to which the aryl group is bound and R is a bivalent organic bridging group containing at least two carbon atoms in the bridge, are combined in an aprotic polar solvent, and in that a halogen monocarboxylic acid with a pKa of less than 2 is added to the mixture thus obtained.

2. Process as claimed in claim 1, characterized in that the aprotic polar solvent is chosen from the group made up of acetone, methyl ethyl ketone, tetrahydrofuran, gamma-butyrolactone, N-methylpyrrolidone and sulpholane.

3. Process as claimed in claim 1 or 2, characterized in that the palladium salt of a monocarboxylic acid employed is palladium acetate.

4. Process as claimed in one or more of claims 1-3, characterized in that a bisphosphine is employed in which group R² is a phenyl group containing at least one methoxy substituent in a position ortho in respect to the phosphorus atom to which the phenyl group is bound and in which bridging group R contains three atoms in the bridge, at least two of which are carbon atoms.

5. Process as claimed in one or more of claims 1-4, characterized in that the bisphosphine is employed in a quantity of from 1.0 to 1.5 mol per mol of palladium.

6. Process as claimed in one or more of claims 1-5, characterized in that the applied halogen monocarboxylic-acid with a pKa of less than 2 is trifluoroacetic acid.

7. Process as claimed in one or more of claims 1-6, characterized in that the halogen monocarboxylic acid is employed in such a quantity that 7.5-30 mol of anion thereof is present in the catalyst solution, per mol of palladium.

8. Process for the preparation of polymers, characterized in that the polymers are prepared by contacting carbon monoxide with one or more olefinically unsaturated compound at an elevated temperature and pressure and in the presence of a diluent in which the polymers are insoluble or virtually insoluble, with a catalyst solution prepared as claimed in claim 1.

9. Process as claimed in claim 8, characterized in that it is carried out at a temperature of from 40 to 120°C, a pressure of from 20 to 150 bar and a molar ratio of the olefinically unsaturated compound(s) relative to carbon monoxide in the mixture to be polymerized of from 10:1 to 1:5 and by using a quantity of catalyst solution which, per mol of olefinically unsaturated compound to be polymerized, contains from 10⁻⁷ to 10⁻³ mol of palladium.

## Patentansprüche

1. Verfahren zur Herstellung einer Katalysatorlösung, dadurch gekennzeichnet, daß ein Palladiumsalz einer Monocarbonsäure und ein Biphosphin mit der allgemeinen Formel (R²)₂P-R-P(R²)₂, worin R² eine Arylgruppe darstellt, die wenigstens einen Alkoxysubstituenten in einer ortho-Stellung bezüglich des Phosphoratoms, an welches die Arylgruppe gebunden ist, enthält und R eine zweiwertige organische Brückengruppe mit einem Gehalt an wenigstens 2 Kohlenstoffatomen in der Brücke bedeutet, in einem aprotischen polaren Lösungsmittel vereinigt werden und daß zu dem solcherart erhaltenen Gemisch eine Halogenmonocarbonsäure mit einem pKa-Wert von kleiner als 2 zugesetzt wird.

2. Verfahren nach Anspruch 1, dadurch gekennzeichnet, daß das aprotische polare Lösungsmittel aus der aus Aceton, Methylethylketon, Tetrahydrofuran, gamma-Butyrolacton, N-Methylpyrrolidon und Sulfolan bestehenden Gruppe ausgewählt wird.

3. Verfahren nach Anspruch 1 oder 2, dadurch gekennzeichnet, daß das eingesetzte Palladiumsalz einer Monocarbonsäure Palladiumacetat ist.

4. Verfahren nach einem oder mehreren der Ansprüche 1 bis 3, dadurch gekennzeichnet, daß ein Biphosphin eingesetzt wird, worin die Gruppe R² eine Phenylgruppe bedeutet, die wenigstens einen Methoxysubstituenten in einer ortho-Stellung bezüglich des Phosphoratoms, an welches die Phenylgruppe gebunden ist, enthält und worin die Brückengruppe R 3 Atome in der Brücke enthält, von denen wenigstens 2 Kohlenstoffatome sind.

5. Verfahren nach einem oder mehreren der Ansprüche 1 bis 4, dadurch gekennzeichnet, daß das Biphosphin in einer Menge von 1,0 bis 1,5 Mol je Mol Palladium verwendet wird.

6. Verfahren nach einem oder mehreren der Ansprüche 1 bis 5, dadurch gekennzeichnet, daß die eingesetzte Halogenmonocarbonsäure mit einem pKa-Wert von kleiner als 2 Trifluoressigsäure ist.

7. Verfahren nach einem oder mehreren der Ansprüche 1 bis 6, dadurch gekennzeichnet, daß die Halogenmonocarbonsäure in einer solchen Menge verwendet wird, daß 7,5 bis 30 Mol Anion hievon in der Katalysatorlösung je Mol Palladium vorliegen.

8. Verfahren zur Herstellung von Polymeren, dadurch gekennzeichnet, daß die Polymeren durch Inberührungbringen von Kohlenmonoxid mit einer oder mit mehreren olefinisch ungesättigten Verbindungen bei einer erhöhten Temperatur und bei erhöhtem Druck und in Anwesenheit eines Verdünnungsmittels, worin die Polymeren unlöslich oder praktisch unlöslich sind, mit einer Katalysatorlösung, hergestellt gemäß Anspruch 1, hergestellt werden.

9. Verfahren nach Anspruch 8, dadurch gekennzeichnet, daß es bei einer Temperatur von 40 bis 120°C, einem Druck von 20 bis 150 bar und einem Molverhältnis der olefinisch ungesättigten Verbindung(en) zu Kohlenmonoxid in dem zu polymerisierenden Gemisch von 10:1 bis 1:5 und durch Anwendung einer solchen Menge an Katalysatorlösung, die je Mol olefinisch ungesättigter, zu polymerisierender Verbindung 10⁻⁷ bis 10⁻³ Mol Palladium enthält, ausgeführt wird.

## Revendications

1. Procédé de préparation d'une solution catalytique, caractérisé en ce que l'on combine un sel de palladium d'un acide monocarboxylique et une bisphosphine de formule générale (R²)₂P-R-P(R²)₂, dans laquelle R² représente un groupe aryle contenant au moins un substituant alcoxy en position ortho par rapport à l'atome de phosphore auquel est lié le groupe aryle et R est un groupe pontant organique bivalent contenant au moins deux atomes de carbone dans le pont, dans un solvant polaire aprotique, et en ce que l'on ajoute au mélange ainsi obtenu un acide monocarboxylique halogéné avec un pKa inférieur à 2.

2. Procédé selon la revendication 1, caractérisé en ce que le solvant polaire aprotique est choisi dans le groupe comprenant l'acétone, la méthyl-éthyl-cétone, le tétrahydrofuranne, la gamma-butyrolactone, la N-méthylpyrrolidone et le sulfolane.

3. Procédé selon la revendication 1 ou 2, caractérisé en ce que le sel de palladium d'un acide monocarboxylique utilisé est l'acétate de palladium.

4. Procédé selon une ou plusieurs des revendications 1 à 3, caractérisé en ce que l'on utilise une bisphosphine dans laquelle le groupe R² est un groupe phényle contenant au moins un substituant méthoxy en position ortho par rapport à l'atome de phosphore auquel est lié le groupe phényle et dans laquelle le groupe pontant R contient 3 atomes dans le pont dont au moins 2 sont des atomes de carbone.

5. Procédé selon l'une ou plusieurs des revendications 1 à 4, caractérisé en ce que l'on utilise la bisphosphine en une quantité de 1,0 à 1,5 moles par mole de palladium.

6. Procédé selon une ou plusieurs des revendications 1 à 5, caractérisé en ce que l'acide monocarboxylique halogéné appliqué, avec un pKa inférieur à 2, est l'acide trifluoroacétique.

7. Procédé selon une ou plusieurs des revendications 1 à 6, caractérisé en ce que l'on utilise l'acide monocarboxylique halogéné en une quantité telle que 7,5 - 30 moles de son anion sont présentes dans la solution catalytique, par mole de palladium.

8. Procédé pour la préparation de polymères, caractérisé en ce que l'on prépare les polymères par la mise en contact du monoxyde de carbone avec un ou plusieurs composés à insaturation oléfinique, à une pression et une température élevées et en présence d'un diluant dans lequel les polymères sont insolubles ou pratiquement insolubles, avec une solution catalytique préparée selon la revendication 1.

9. Procédé selon la revendication 8, caractérisé en ce qu'on l'effectue à une température comprise entre 40 et 120°C, sous une pression de 20 à 150 bars et dans un rapport molaire du ou des composé(s) à insaturation oléfinique par rapport au monoxyde de carbone dans le mélange à polymériser allant de 10 : 1 à 1 : 5, et en utilisant une quantité de solution catalytique qui, par mole du composé à insaturation oléfinique à polymériser,contient de 10⁻⁷ à 10⁻³ moles de palladium.
